# DEMANDE DE BREVET EUROPEEN

(11) **EP 2 631 853 A1**
(43) Date de publication de la demande: **28.08.2013**
(21) Numéro de dépôt: 13155553.4
(22) Date de dépôt: 16.02.2013
(51) Int. Cl.: G06Q 10/06

(54) **Procédé et système d'assistance à l'exécution d'un contrôle technique de véhicule, comprenant une étape préalable de configuration du véhicule à contrôler**

(30) Priorité: 20.02.2012 FR 1200477
(71) Demandeur: Martin 3D, 53300 Ambrieres les Vallees (FR)
(72) Inventeur: Martin, Bruno, 53640 Champeon (FR)
(74) Mandataire: Gicquel, Frédéric

(57) **Abrégé**

Le procédé d'assistance à l'exécution d'un contrôle technique comprend les étapes de :
- constitution d'une base (1) de fiches de contrôle (10), incluant au moins un critère de sélection associé à chaque fiche ;
- saisie informatique de paramètres caractéristiques d'un véhicule à contrôler ;
- configuration, à l'aide d'un logiciel de configuration (21), du véhicule à contrôler sur la base desdits paramètres caractéristiques saisis, conduisant à l'élection d'au moins un critère de sélection ;
- sélection automatique d'au moins une fiche de contrôle (10) à utiliser associée au critère de sélection élu.

## Description

Le domaine de l'invention est celui des opérations de contrôle de la conformité des véhicules terrestres. Plus précisément, l'invention concerne une méthode et un système d'assistance à l'exécution des opérations de contrôle technique de véhicules terrestres, utilisant des fiches de contrôle détaillant les opérations de contrôle spécifiques à chaque véhicule à contrôler.

L'invention s'applique tant au contrôle technique de véhicules avant leur première mise en circulation que pour les véhicules dits d'occasion pour lesquels des opérations de maintenance et/ou des opérations de transformation ont été effectuées et dont il faut vérifier la conformité.

De plus, l'invention s'applique à tout type de véhicules terrestres : en premier lieu les véhicules industriel légers et lourds (VL & PL : de moins de 3,5t et de plus de 3,5t) et leurs remorques ou semi-remorques, mais également les véhicules automobiles, les véhicules agricoles, les véhicules de travaux publics...

Dans le domaine de l'invention, les opérations de contrôle techniques s'effectuent sur la base de fiches de contrôle qui énoncent de façon détaillée les opérations à réaliser, chaque fiche de contrôle étant destinée à un type de véhicule déterminé. Le type de véhicule et les caractéristiques de celui-ci déterminent la fiche de contrôle à appliquer au véhicule considéré.

En outre, ces fiches de contrôle sont établies conformément aux normes et réglementations en vigueur. Or, celles-ci évoluent régulièrement et il est nécessaire de s'organiser pour mettre en veille les nouveaux textes à appliquer pour le contrôle technique des véhicules.

Actuellement, les opérateurs concernés par le contrôle technique des véhicules ont essentiellement deux systèmes à leur disposition pour mettre en veille les textes normatifs et réglementaires qui s'appliquent :
- une veille dite « tirée » : selon ce système, un organisme, ou plus généralement un prestataire de services, gère une base de données qui recense tous les textes normatifs et réglementaires, ainsi que les fiches de contrôle associées, et les utilisateurs (généralement des adhérents) accèdent à cette base de données à distance pour vérifier périodiquement que leur documentation est à jour ou, le cas contraire, mettre à jour leur documentation ;
- une veille dite « poussée » : l'opérateur s'abonne à un service selon lequel il définit un ensemble de caractéristiques correspondant aux véhicules qu'il doit contrôler et le prestataire de services lui envoie, aussi souvent que nécessaire, des mises à jour des documentations techniques correspondant aux véhicules que l'utilisateur doit contrôler.

Dans les deux cas, le système de veille expose l'opérateur du contrôle technique à des difficultés, voire à des erreurs, quant à la mise à jour des fiches mais aussi au choix de la fiche de contrôle à sélectionner pour le véhicule considéré.

En effet, l'utilisateur dispose d'une documentation technique surabondante, incluant dans certains cas, pour un même véhicule concerné, plusieurs fiches de contrôle successives (correspondant chacune à différentes mises à jour). Il n'est donc pas aisé pour l'opérateur de choisir la bonne version de la fiche, la date de mise en service du véhicule et/ou celle des dernières modifications étant à prendre en compte pour sélectionner la date de la version appropriée de la fiche de contrôle.

De plus, la fiche de contrôle peut concerner un type de véhicule et plusieurs de ses variantes, par exemple en fonction de gammes de dimensions et/ou de poids. Dans ce cas, une même fiche peut inclure certains points à contrôler pour une variante du véhicule tandis que ces mêmes points ne sont pas à vérifier pour une autre variante. Cela tend donc à complexifier la tâche de sélection des points contrôlés par l'opérateur.

Par ailleurs, il est à noter que la pratique actuelle des opérateurs est de recourir à des fiches de contrôle sous forme de papier. Or, deux à quatre pages peuvent être nécessaires pour consigner les points contrôlés. De plus, les opérateurs sont légalement tenus de conserver les fiches de contrôle utilisées pendant dix ans.

On comprend donc que le système de contrôle actuel, avec son archivage, est relativement contraignant et fastidieux, en plus d'engendrer un risque d'erreurs et/ou d'oublis.

L'invention a notamment pour objectif de pallier les inconvénients de l'art antérieur.

Plus précisément, l'invention a pour objectif de proposer un procédé et un système d'assistance à l'exécution d'un contrôle technique qui garantisse à l'opérateur qu'il exécute les points de contrôle appropriés pour un véhicule considéré.

L'invention a également pour objectif de fournir un tel procédé et un tel système qui se présentent de façon plus ergonomique, plus conviviale et plus sécurisé que le système de l'art antérieur, que ce soit au cours de l'exécution des opérations de contrôle ou au moment de l'archivage des opérations de contrôle réalisées.

Ces objectifs, ainsi que d'autres qui apparaîtront par la suite, sont atteints grâce à l'invention qui a pour objet un procédé d'assistance à l'exécution d'un contrôle technique des véhicules terrestres, le contrôle étant réalisé à l'aide d'indications fournies par des fiches de contrôle réglementaires, **caractérisé en ce qu'il** comprend les étapes de :
- constitution d'une base informatique d'archivages de fiches de contrôle, incluant au moins un critère de sélection associé à chaque fiche ;
- saisie informatique de paramètres caractéristiques d'un véhicule à contrôler ;
- configuration, à l'aide d'un logiciel de configuration, du véhicule à contrôler sur la base desdits paramètres caractéristiques saisis, conduisant à l'élection d'au moins un critère de sélection ;
- sélection automatique d'au moins une fiche de contrôle à utiliser associée au critère de sélection élu.

Ainsi, grâce à l'invention, l'opérateur en charge du contrôle technique est assisté dans sa démarche de sélection de la fiche de contrôle appropriée au véhicule à contrôler.

En effet, en « décrivant » le véhicule à contrôler, ceci par la saisie des caractéristiques du véhicule, le procédé selon l'invention conduit à la sélection automatique de la fiche de contrôle à utiliser, ceci sans risque d'erreurs quant au type de fiche de contrôle et/ou quant à la version (date de mise à jour) de celle-ci.

Comme cela va être expliqué plus en détail par la suite, une fois la ou les fiches de contrôle sélectionnées par le procédé, celles-ci sont présentées à l'opérateur, préférentiellement avec une aide illustrative, et selon un ordonnancement des points à contrôler également défini par le procédé selon l'invention.

Selon une solution avantageuse, le procédé met en oeuvre un moyen d'affichage et comprend une étape d'affichage, sur le moyen d'affichage, de la fiche de contrôle sélectionnée.

Ainsi, le procédé d'assistance à l'exécution du contrôle technique selon l'invention peut s'exécuter par l'affichage d'instructions successives sur un écran, ceci en ayant défini une présentation séquencée et clarifiée des instructions facilitant leur lecture par l'opérateur.

En outre, on évite à l'opérateur de devoir gérer et manipuler une quantité importante de fiches. En particulier, on évite à l'opérateur de devoir se munir des fiches de contrôles, pendant tous ses déplacements lors du contrôle technique, celui-ci s'opérant dans un atelier et sur des véhicules avec lesquels il est souvent difficile de préserver la propreté des fiches de contrôle sous forme papier.

Avantageusement, le procédé selon l'invention met en oeuvre un moyen d'affichage et comprend une étape de représentation, sur le moyen d'affichage, du véhicule à contrôler tel que défini lors de l'étape de configuration, la représentation permettant de visualiser et de localiser un ou des points de contrôle à effectuer sur le véhicule.

Une telle caractéristique du procédé contribue à faciliter et clarifier les étapes et les points de contrôle à effectuer par l'opérateur.

Préférentiellement, le procédé selon l'invention comprend une étape de saisie informatique des opérations de contrôle réalisées.

De cette façon, il est possible d'assister également l'opérateur dans les opérations de saisie, ceci en le guidant au fur et à mesure des points contrôlés et sur la façon de rendre compte du résultat du contrôle.

Dans ce cas, le procédé comprend avantageusement une étape d'archivage informatique de ladite étape de saisie informatique des opérations de contrôle réalisées.

De cette façon, le procédé selon l'invention contribue également à faciliter les opérations d'archivage, légalement obligatoires, des opérations de contrôle réalisées.

Préférentiellement, le procédé comprend une mise à jour régulière de la base informatique d'archivage de fiches de contrôle.

On note que la mise à jour de la base peut être effectuée soit périodiquement et automatiquement, soit à la demande par exemple dans le cadre de formules d'abonnement.

Avantageusement, ladite mise à jour est réalisée avec une conservation des versions antérieures de fiches de contrôle. De cette version, le procédé selon l'invention n'utilise pas seulement les dernières versions à jour des fiches de contrôle, ce qui peut toutefois s'envisager si le procédé est dédié exclusivement à être appliqué à des véhicules neufs.

La conservation des versions antérieures permet donc d'effectuer le contrôle technique de véhicules d'occasion, dont les dates de mise en service peuvent conduire à utiliser des versions antérieures de fiches de contrôle.

L'invention concerne également un système pour l'exécution d'un procédé d'assistance à l'exécution d'un contrôle technique tel que décrit précédemment, **caractérisé en ce qu'il** comprend :
- une base informatique d'archivage de fiches de contrôle, incluant au moins un critère de sélection pour chacune desdites fiches de contrôle ;
- des moyens de saisie informatique de paramètres caractéristiques d'un véhicule à contrôler ;
- un logiciel de configuration d'un véhicule à contrôler couplé aux moyens de saisie informatiques de paramètres caractéristiques d'un véhicule à contrôler, permettant l'élection d'au moins un critère de sélection correspondant au véhicule configuré ;
- des moyens de sélection automatique d'au moins une fiche de contrôle à utiliser associée audit ou auxdits critères de sélection.

Selon un premier mode de réalisation, ledit logiciel de configuration et lesdits moyens de sélection sont hébergés par un ordinateur mobile, hébergeant également ladite base informatique.

Ainsi, l'opérateur dispose de moyens autonomes pour réaliser les opérations de contrôle, ceci permettant donc d'agir dans un environnement qui ne met pas à disposition des moyens de communication avec un réseau d'échange de données.

Selon un deuxième mode de réalisation, le système comprend au moins un ordinateur mobile et un serveur distant dudit ordinateur mobile, ledit ordinateur et ledit serveur étant aptes à communiquer entre eux, ledit logiciel de configuration et lesdits moyens de sélection étant hébergés par ledit ordinateur mobile, et la base informatique étant hébergée par ledit serveur.

La base informatique étant susceptible d'être constituée par une quantité très importante de données, un tel mode de réalisation évite de mobiliser une grande capacité de la mémoire de l'ordinateur mobile pour la gestion et la mémorisation de la base informatique.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique d'un système d'assistance à l'exécution d'un contrôle technique selon l'invention ;
- la figure 2 est une illustration schématique d'une étape de configuration d'un véhicule dans un procédé d'assistance à l'exécution d'un contrôle technique selon l'invention ;
- la figure 3 est une illustration schématique d'un exemple de résultat à l'issue d'une étape de configuration d'un véhicule dans un procédé d'assistance à l'exécution d'un contrôle technique selon l'invention.

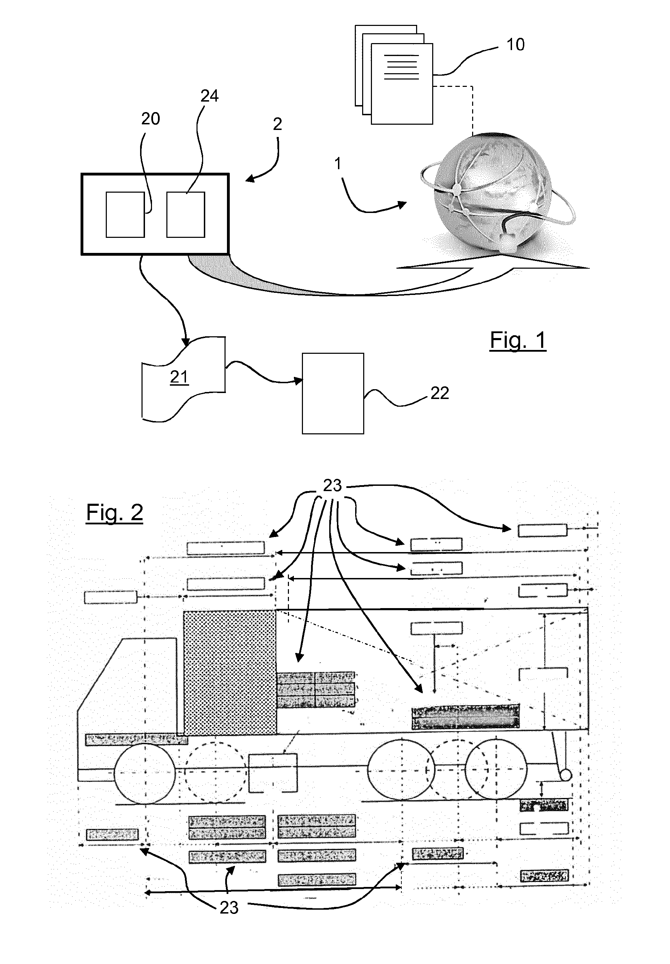

En référence à la figure 1, un système d'assistance à la réalisation d'opérations de contrôles techniques de véhicules terrestres, permettant l'exécution d'un procédé décrit plus en détail par la suite, comprend :
- une base informatique d'archivage 1 de fiches de contrôle 10, ces fiches de contrôle étant chacune indexée avec un critère de sélection ;
- des moyens de saisie informatiques 20 de paramètres caractéristiques d'un véhicule à contrôler, ces moyens de saisie étant ceux, par exemple d'une tablette numérique ou d'un ordinateur portable 2 ;
- un logiciel de configuration 21 d'un véhicule à contrôler, couplé aux moyens de saisie 20, ce logiciel de configuration permettant l'élection d'au moins un critère de sélection associé à l'une des fiches de contrôle de la base informatique d'archivage ;
- des moyens de sélection automatique 22, d'une fiche de contrôle à utiliser et associée à l'un des critères de sélection élu préalablement.

La base informatique d'archivage intègre bien entendu toutes les fiches de contrôle 10 adaptées à chacun des véhicules susceptibles d'être contrôlés, qu'ils soient neufs ou d'occasion (la date de première mise en circulation et/ou la date de certaines transformations du véhicule étant prise en considération) et peut bien entendu intégrer des fiches personnalisées, propres à un utilisateur considéré. La base informatique d'archivage comprend en outre, selon le présent mode de réalisation, les données relatives :
- à l'ensemble des véhicules susceptibles d'être contrôlés, la base incluant une illustration 3D de chaque véhicule ;
- des informations spécifiques à des véhicules seulement contrôlés par un utilisateur (abonné).

Les informations relatives aux véhicules susceptibles d'être contrôlés correspondent au moins en partie à des caractéristiques du véhicule détaillées par la suite, ces caractéristiques (ou balises) étant recensées dans une table de correspondance qui contient également au moins un critère de sélection associé à chaque fiche de contrôle présente dans la base d'archivage. Le fonctionnement classique d'une telle table de correspondance conduit à élire un critère de sélection d'une fiche de contrôle (un tel critère de sélection pouvant être en pratique une simple référence (ou un code, ou un numéro...) d'une fiche) en fonction de paramètres caractéristiques correspondant à un véhicule à contrôler présent également dans la base.

La base informatique d'archivage est régulièrement mise à jour automatiquement, une telle étape de mise à jour conduisant à l'enrichissement de la base par l'intégration de nouvelles versions des fiches de contrôle présentes et/ou l'intégration de nouvelles fiches de contrôle. Les mises à jour peuvent concerner également l'ensemble du logiciel permettant l'exécution du procédé d'assistance à l'exécution d'un contrôle technique selon l'invention. En outre, cette mise à jour peut être faite sur site ou à distance.

L'étape de mise à jour de la base informatique d'archivage est réalisée tout en conservant une version antérieure de chaque fiche de contrôle mise à jour.

Les fiches de contrôle, issues de textes réglementaires et normatifs, sont des fiches évolutives, adaptées à la configuration 3D de chaque véhicule répertorié dans la base. Ces fiches, en pratique désignées par fiche de « contrôle de conformité initiale », comprennent selon un mode de réalisation particulier, une première partie incluant les indications suivantes :
- une référence, constituant en l'occurrence le critère de sélection auquel la fiche est indexée dans la base informatique d'archivage ;
- un code de révision (ou de mise à jour) ;
- éventuellement un numéro de commande ;
- des caractéristiques techniques (constituant des paramètres conduisant à l'élection du critère de sélection de la fiche, en l'occurrence conduisant à l'élection de la référence mentionnée ci-dessus) liées par exemple :
   - au type de véhicule (marque, type commercial, type mine, numéro de série, empattement, nombre de places avant/arrière) ;
   - à des caractéristiques dimensionnelles du véhicule (poids à vide, PTAC, PTRA, poids maximum sur les différents essieux...).

Une fiche de contrôle classique comprend en outre une partie listant les points à contrôler suivants :
- signalisations lumineuses
   - feux de croisement ;
   - feux de route ;
   - feux de brouillard avant ;
   - feux de position avant ;
   - indicateur de direction avant ;
   - indicateur de direction répétiteur avant ;
   - feux de position ;
   - feux stop ;
   - feux indicateur de direction arrière ;
   - feux de plaque d'immatriculation arrière ;
   - feux de marche arrière ;
   - feux de brouillard arrière ;
   - feux de position latéraux ;
   - feux d'encombrement avant ;
   - feux d'encombrement arrière ;
   - feux de détresse ;
   - catadioptre avant ;
   - catadioptres latéraux ;
   - catadioptre arrière ;
   - feux orientables ;
   - feux de progression lente (gyrophare) ;
   - feux d'intérêts généraux (pour désigner les signalisations spécifiques) ;
   - triangle de signalisation (équipement pliable pour accident/panne) ;
   - dispositif réfléchissant ;
- prescriptions diverses :
   - réservoir additionnel ;
   - grue ou bras en cours de validité ;
   - anti-projection ;
   - projection latérale ;
   - barre anti-encastrement avant ;
   - barre anti-encastrement arrière ;
   - emplacement plaque d'immatriculation arrière ;
   - plaque constructeur ;
   - frappe à froid ;
   - plaque de tare ;
   - pneumatiques sur chaque essieu et type de monte (simple ou jumelée) ;
   - pneumatiques de secours ;
   - disque de limitation de vitesse (60, 80, 90) ;
- extincteur :
   - présence du support ;
   - si extincteur, pression du manomètre et date de validité extincteur avec numéro de série ;
- engin motorisé non roulant (moteur auxiliaire).

Tous ces points de contrôle doivent être consignés dans différentes colonnes, telles que des colonnes « nombre », « positionnement », « marquage », « fonctionnement ». De plus, des codes standards de contrôle peuvent être utilisés, tels que « C » pour conforme, « NC » pour non conforme, « IN » pour inchangé et « NA » pour non applicable.

Une fiche de contrôle type comprend en outre les parties de vérification suivantes :
- masses et dimensions :
   - vérification des masses et dimensions (conforme/non conforme) ;
   - contrôle de répartition des charges (contrôle/non conforme) ;
- conformité du véhicule :
   - certificat de conformité (oui/non) ;
   - pneumatiques conformes (oui/non) ;
   - certificat de carrossage (conforme/non conforme) ;
- cohérence des documents par rapport au code de la route (conforme/non conforme).

La saisie correcte de l'ensemble de ces points de contrôle et le traitement informatique de cette saisie conduit aux renseignements de conclusion intermédiaire ou finale, tels que :
- le contrôle de conformité est (conforme/non conforme), puis :
   - fiche de sortie véhicule remplie et conforme (case à cocher) ;
   - fiche de relevés de côtes remplie avec ticket de pesée (case à cocher) ;
   - date de contrôle (à saisir) ;
   - visa du contrôleur ;
- observations (saisie libre) ;
- conformité administrative du véhicule (conforme/non conforme), puis :
   - date de contrôle (à saisir) ;
   - visa du contrôleur administratif.

Au final, le véhicule est classé conforme ou non conforme et, s'il est non conforme, la fiche prévoit de saisir les actions correctives à apporter, puis, si elles sont apportées, la date de la mise en conformité accompagnée du nom du responsable de l'action et du nom du responsable du contrôle.

On note que le procédé selon l'invention peut prévoir de recourir à des fiches standardisées de ce type et de les modifier, adapter, personnaliser en fonction du véhicule à contrôler, ceci notamment en n'utilisant éventuellement que certains des champs de saisie et/ou certains des points de contrôle ou de mesure.

Selon le principe de l'invention, le procédé d'assistance à l'exécution d'un contrôle technique de véhicule terrestre prévoit de plus une étape de configuration, à l'aide d'un logiciel de configuration, de véhicules à contrôler, ceci sur la base de la saisie de paramètres caractéristiques du véhicule va être contrôlé, ces paramètres caractéristiques, une fois saisis, conduisant comme déjà mentionné à l'élection d'un critère de sélection d'une fiche de contrôle.

Le logiciel de configuration, autrement désigné configurateur 21, est prévu pour permettre :
- le paramétrage d'un véhicule type en 3D ;
- la saisie d'informations spécifiques à la carrosserie et au véhicule à contrôler ;
- l'ajout, dans le configurateur, de modules additionnels : réservoir, coffre...

Le configurateur est conçu pour créer automatiquement les dossiers propres à chaque contrôle technique, pour chaque configuration effectuée, ceci avec une gestion des divers fichiers attachés. Le configurateur est prévu pour permettre d'éditer une version imprimable de chaque fiche de contrôle identifié, ceci éventuellement avec le logotype de la société ayant effectué le contrôle. Le configurateur peut donner la possibilité de copier les bases d'un dossier, avec ou sans les résultats de contrôle.

Le configurateur peut être en lien avec un ou plusieurs modules indépendants, chacun accessible par exemple sur abonnement, avec gestion de licence mono ou multipostes. Le configurateur peut alors fonctionner avec une passerelle pour permettre le transfert des informations d'un module à l'autre, ou depuis des fichiers clients, de type texte ou tableur ou autres.

Le configurateur est conçu de façon évolutive, la possibilité étant donnée de lui ajouter :
- des variantes pour des nouveaux types de véhicules, de carrosserie, d'équipements auxiliaires ou d'options ;
- des critères de sélection de fiches de veille sur les configurations 3D d'un véhicule ;
- ajouter des informations spécifiques à des critères de sélection de fiches de contrôle, ces informations étant éventuellement d'origine différente (l'utilisateur pouvant par exemple personnaliser ses fiches de contrôle avec ses propres informations, modifiables dans ce cas par lui-même).

Le logiciel de configuration du véhicule à contrôler, couplé à des moyens de saisie informatique de paramètres caractéristiques du véhicule (tactile ou non, suivant l'ordinateur mobile mis en oeuvre) procède dans un premier temps par une définition générale du véhicule à contrôler, ceci en proposant à l'utilisateur, selon un mode de réalisation préférentiel, de choisir parmi les types de véhicules suivants :
- tracteurs ;
- porteurs ;
- remorques.

A l'issue de cette première sélection, l'illustration du type de véhicule choisi peut s'afficher sur les moyens d'affichage 24 de l'ordinateur mobile 2, après avoir choisi le nombre d'essieux du véhicule.

En fonction de la sélection précédente, un deuxième menu de sélection peut être proposé à l'utilisateur, invitant celui-ci à choisir par exemple parmi les matériels suivants :
- bennes ;
- citernes ;
- bras ;
- plateaux
- ...

A l'issue de cette étape, une nouvelle illustration du véhicule peut s'afficher.

Selon le type de véhicule choisi et le type de matériel définis, le configurateur peut ensuite amener l'utilisateur à choisir par exemple un matériel complémentaire parmi les suivants :
- grue avant ;
- grue arrière ;
- hayon ;
- chariot embarqué
- caisse à outils
- ...

A nouveau, en fonction du choix opéré, une nouvelle illustration peut être proposée à l'utilisateur, enrichie du ou des équipements sélectionnés lors de la dernière étape.

En fonction des premiers choix opérés par l'utilisateur, le logiciel de configuration propose ensuite à l'utilisateur une fiche de relevé de carrosserie telle que celle illustrée par la figure 2, permettant de saisir dans une pluralité de fenêtres de saisie 23 les paramètres caractéristiques du véhicule type sélectionné préalablement.

Cette fiche de relevé de carrosserie peut présenter une première partie de saisie d'informations parmi les suivantes :
- numéro de dossier/type (VN/VO) ;
- client ;
- marque ;
- type commercial ;
- numéro de série ;
- type administratif ;
- type cabine ;
- nombre de places (avant et arrière) ;
- poids total autorisé en charge (PTAC), en kg ;
- poids total roulant autorisé (PTRA), en kg ;
- données constructeur parmi lesquelles : poids avant en kg, poids arrière en kg, longueur en mètre, hauteur en mètre, largeur en mètre ;
- pour les véhicules carrossés, les relevés de poids à l'avant et à l'arrière, en kg, et pour chaque relevé une pesée réservoir vide et une pesée réservoir plein, ainsi que :
   - la largeur ;
   - l'épaisseur des portes ;
   - les données relatives aux ferrures ;
   - le type de carrosserie ;
   - le type de kit et numéro de série du kit ;
   - le type de benne et le numéro de série de la benne ;
   - les données concernant la barre anti-encastrement (BAE) ;
   - le poids du châssis de la cabine et le poids de la carrosserie seule ;
   - la charge utile ;
   - le porte-à-faux arrière d'origine ;
   - ...

Sur la base de tout ou partie des informations saisies, celles-ci correspondant à des paramètres caractéristiques du véhicule à contrôler selon le principe de l'invention, le configurateur transmet les données saisies à des moyens de sélection automatiques d'une fiche de contrôle à utiliser, ces moyens de sélection automatiques étant, selon un mode de réalisation particulier, constitués par une table de correspondance comme évoqué précédemment, mettant en relation les paramètres caractéristiques saisis avec le ou les critères de sélection associés à une fiche de contrôle.

L'étape de configuration, telle que celle décrite précédemment conduit donc à l'élection d'un critère de sélection et donc à la sélection d'une fiche de contrôle.

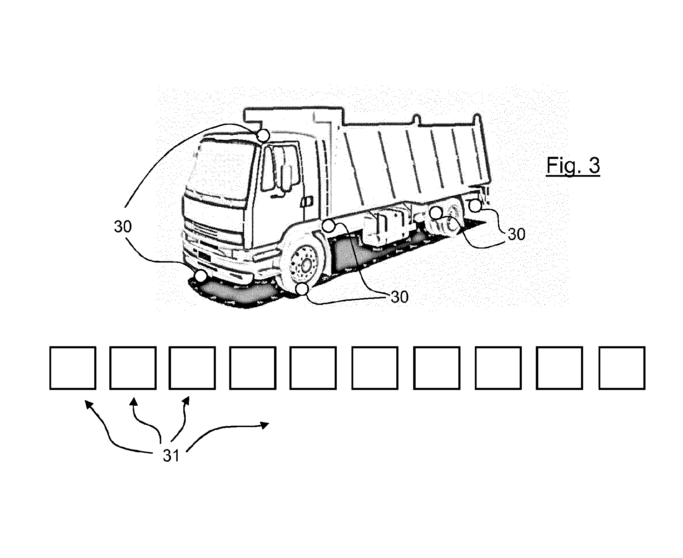

Par conséquent, à l'issue de l'étape de configuration du véhicule à contrôler, l'écran de l'ordinateur mobile à l'aide duquel les paramètres caractéristiques du véhicule ont été saisis peut afficher :
- une représentation 3D du véhicule à contrôler, tel qu'illustré par exemple à la figure 3 ;
- la fiche de contrôle correspondant au véhicule configuré, ou un lien vers cette fiche de contrôle.

En outre, l'illustration 3D du véhicule configuré permet préférentiellement de visualiser et de localiser tout ou partie des points de contrôle à effectuer sur le véhicule, ceci en référence à des points de contrôle 30 localisés sur le véhicule, de l'opération de contrôle à effectuer.

Ces points de contrôle 30 et/ou des boutons informatiques 31 peuvent être utilisés par l'utilisateur pour accéder à des parties de la fiche de contrôle sélectionnée, par exemple :
- fiche réglementaire de montage par -cycliste ;
- fiche réglementaire BAE ;
- fiche réglementaire feux d'encombrement ;
- fiche réglementaire feux avant ;
- fiche réglementaire cefficient de charge des pneumatiques ;
- fiche réglementaire tableau de capacités de charge ;
- fiche réglementaire montage des bavettes et garde-boue ;
- fiche réglementaire plaque d'immatriculation ;
- ...

L'utilisateur accède ainsi à chacune des parties de la fiche de contrôle et, pour chaque partie, procède à une étape de saisie informatique des opérations de contrôle réalisées. Le système est prévu de telle sorte que la conformité de la saisie est vérifiée et validée pour permettre à l'utilisateur d'accéder à une étape de contrôle suivante.

On note que le système est prévu de telle sorte que la possibilité est donnée à l'utilisateur d'accéder à un module de gestion de documentation donnant la possibilité d'ajouter des photos et/ou des fichiers externes.

Par ailleurs, le système procède à un archivage automatique de chaque étape de contrôle, soit (éventuellement dans un premier temps) sur le moyen de stockage de l'ordinateur mobile utilisé, soit (directement ou seulement dans un deuxième temps) sur une ressource externe à l'ordinateur mobile utilisé.

Comme indiqué précédemment, le système pour procéder à un contrôle technique tel que décrit précédemment, met en oeuvre préférentiellement un ordinateur mobile (de type tablette ou ordinateur portable). Dans ce cas, le logiciel de configuration et les moyens de sélection automatiques d'une fiche de contrôle à utiliser sont hébergés par l'ordinateur mobile.

Selon un premier mode de réalisation, la base informatique d'archivage 1 (figure 1) est également hébergée par l'ordinateur mobile tandis que, selon un deuxième mode de réalisation, la base informatique d'archivage est hébergée par un serveur distant et séparé de l'ordinateur mobile qui héberge le logiciel de configuration et les moyens de sélection.

Par ailleurs, on note qu'un système tel que celui décrit précédemment, peut également être utilisé pour procéder à un calcul de répartition des charges d'un véhicule terrestre, le système étant alors prévu pour permettre :
- la réalisation d'un calcul de répartition des charges suivant les paramètres issus du configurateur 3D ;
- l'accès à des informations de conformité du véhicule suivant la réglementation et les préconisations constructeur ;
- l'obtention d'un dessin 3D représentatif du véhicule carrossé avec des points de localisation et de visualisation de chaque partie réglementaire applicable au véhicule ;
- d'obtenir un état imprimable du calcul du plan du véhicule carrossé.

Un procédé et un système selon l'invention peuvent en outre être configurés pour donner un accès à des modules optionnels tels que :
- assistance à l'émission d'un devis ;
- revue des exigences d'un dossier ;
- fiche de relevés de carrosserie en fonction de la configuration 3D d'un véhicule ;
- fiche de contrôle à réception et sortie d'un véhicule ;
- gestion automatique de dérogations ;
- documentation technique spécifique ;
- contrôle d'atelier ;
- réalisation du calcul de répartition des charges après carrossage ;
- édition et gestion d'annexes ;
- gestion de documents constructeurs ;
- rapport de contrôle des mises en service des équipements montés sur le véhicule ;
- accès à des tableaux récapitulatifs de produits homologués fournis par l'utilisateur et/ou le constructeur ;
- fiche spécifique à la barre anti-encastrement et au pare-cycliste ;
- fiche plaque de tare
- ...

Bien entendu, toutes les interfaces homme-machine et les données traitées par le système selon l'invention sont modulables en fonction des spécificités de l'utilisateur.

## Revendications

1. Procédé d'assistance à l'exécution d'un contrôle technique des véhicules terrestres, le contrôle étant réalisé à l'aide d'indications fournies par des fiches de contrôle réglementaires,
**caractérisé en ce qu'il** comprend les étapes de :
- constitution d'une base informatique d'archivages (1) de fiches de contrôle (10), incluant au moins un critère de sélection associé à chaque fiche ;
- saisie informatique de paramètres caractéristiques d'un véhicule à contrôler ;
- configuration, à l'aide d'un logiciel de configuration (21), du véhicule à contrôler sur la base desdits paramètres caractéristiques saisis, conduisant à l'élection d'au moins un critère de sélection ;
- sélection automatique d'au moins une fiche de contrôle (10) à utiliser associée au critère de sélection élu.

2. Procédé d'assistance à l'exécution d'un contrôle technique des véhicules terrestres selon la revendication 1, **caractérisé en ce qu'il** met en oeuvre un moyen d'affichage (24) et **en ce qu'**il comprend une étape d'affichage, sur le moyen d'affichage, de la fiche de contrôle (10) sélectionnée.

3. Procédé d'assistance à l'exécution d'un contrôle technique des véhicules terrestres selon la revendication 1, **caractérisé en ce qu'il** met en oeuvre un moyen d'affichage et **en ce qu'**il comprend une étape de représentation, sur le moyen d'affichage (24), du véhicule à contrôler tel que défini lors de l'étape de configuration, la représentation permettant de visualiser et de localiser un ou des points de contrôle (30) à effectuer sur le véhicule.

4. Procédé d'assistance à l'exécution d'un contrôle technique des véhicules terrestres selon la revendication 1, **caractérisé en ce qu'il** comprend une étape de saisie informatique des opérations de contrôle réalisées.

5. Procédé d'assistance à l'exécution d'un contrôle technique des véhicules terrestres selon la revendication 4, **caractérisé en ce qu'il** comprend une étape d'archivage informatique de ladite étape de saisie informatique des opérations de contrôle réalisées.

6. Procédé d'assistance à l'exécution d'un contrôle technique des véhicules terrestres selon la revendication 1, **caractérisé en ce qu'il** comprend une mise à jour régulière de la base informatique d'archivages de fiches de contrôle.

7. Procédé d'assistance à l'exécution d'un contrôle technique des véhicules terrestres selon la revendication 6, **caractérisé en ce que** ladite mise à jour est réalisée avec une conservation des versions antérieures de fiches de contrôle.

8. Système pour l'exécution d'un procédé d'assistance à l'exécution d'un contrôle technique des véhicules terrestres selon l'une quelconque des revendications 1 à 7, **caractérisé en ce qu'il** comprend :
- une base informatique d'archivages (1) de fiches de contrôle (10), incluant au moins un critère de sélection pour chacune desdites fiches de contrôles (10) ;
- des moyens de saisie informatique de paramètres caractéristiques d'un véhicule à contrôler ;
- un logiciel de configuration (21) d'un véhicule à contrôler couplé aux moyens de saisie informatique (20) de paramètres caractéristiques d'un véhicule à contrôler, permettant l'élection d'au moins un critère de sélection correspondant au véhicule configuré ;
- des moyens de sélection automatique (22) d'au moins une fiche de contrôle à utiliser associée audit ou auxdits critères de sélection élus.

9. Système selon la revendication 8, **caractérisé en ce que** ledit logiciel de configuration (21) et lesdits moyens de sélection (22) sont hébergés par un ordinateur mobile (2), hébergeant également ladite base informatique (1).

10. Système selon la revendication 8, **caractérisé en ce qu'il** comprend au moins au ordinateur mobile (2) et un serveur distant dudit ordinateur mobile, ledit ordinateur et ledit serveur étant aptes à communiquer entre eux, et **en ce que** :
- ledit logiciel de configuration (21) et lesdits moyens de sélection (22) sont hébergés par ledit ordinateur mobile (2),
- ladite base informatique (1) est hébergée par ledit serveur.
